## Europäisches Patentamt
## European Patent Office
## Office européen des brevets

(19)

(11) Numéro de publication: **0 143 012**
**B1**

(12) **FASCICULE DE BREVET EUROPÉEN**

(45) Date de publication du fascicule du brevet:
29.03.89

(21) Numéro de dépôt: **84401741.8**

(22) Date de dépôt: **29.08.84**

(51) Int. Cl.⁴: **G 01 B 11/00,** G 01 S 5/16,
G 01 S 17/87

(54) **Installation pour la détermination des coordonnées spatiales d'un point d'un pièce.**

(30) Priorité: **08.09.83 FR 8314324**

(43) Date de publication de la demande:
**29.05.85 Bulletin 85/22**

(45) Mention de la délivrance du brevet:
**29.03.89 Bulletin 89/13**

(84) Etats contractants désignés:
**DE GB IT SE**

(56) Documents cité:
**EP-A-0 070 141**
**EP-A-0 087 518**
**DE-A-2 605 772**
**DE-A-2 911 739**
**GB-A-1 449 050**
**US-A-4 113 388**
**US-A-4 209 252**

(73) Titulaire: **SCIAKY S.A. Société dite:, 119 quai Jules Guesde, F-94400 Vitry sur Seine (Val de Marne) (FR)**

(72) Inventeur: **Sciaky, Mario, 46 rue Fabert, Paris (FR)**
Inventeur: **Cazes, Roland, 6 avenue Marinville, Saint Maur des Fosses (FR)**

(74) Mandataire: **Cabinet Pierre HERRBURGER, 115, Boulevard Haussmann, F-75008 Paris (FR)**

EP 0 143 012 B1

LIBER, STOCKHOLM 1989

## Description

"Installation pour la détermination des coordonnées spatiales d'un point d'une pièce, notamment pour le contrôle d'un outillage tel qu'un outillage de soudage de carrosserie de véhicule automobile".

L'invention concerne une installation pour la détermination des coordonnées spatiales d'un point d'une pièce, notamment pour le contrôle d'un outillage tel qu'un outillage de soudage de carrosserie de véhicule automobile.

Les installations de soudage de pièces de carrosserie automobile comportent un outillage destiné à assurer le positionnement relatif et le serrage des pièces de carrosserie que l'on doit souder les unes aux autres. Cet outillage de positionnement et de serrage comporte ainsi plusieurs pièces d'appui dont le profil est la copie exacte, ou contre-forme, de la partie de surface correspondant à la pièce de la carrosserie à assembler. Ces surfaces d'appui doivent, avant l'utilisation de l'installation, être positionnées rigoureusement sur la platine de support de l'outillage les unes par rapport aux autres et par rapport aux organes de serrage et de soudage, afin que les pièces à souder s'adaptent parfaitement, par leur forme, sur ces surfaces, afin que ces pièces soient correctement positionnées et serrées les unes par rapport aux autres et afin que le soudage des pièces s'effectue à des endroits précis.

Ces réglages préalables sont longs et délicats, et s'effectuent manuellement, de manière empirique par approche successive en utilisant des structures spécifiques ajustées sur des moules des pièces à assembler et permettent de régler la position de chacune des surfaces d'appui par rapport à des points de référence.

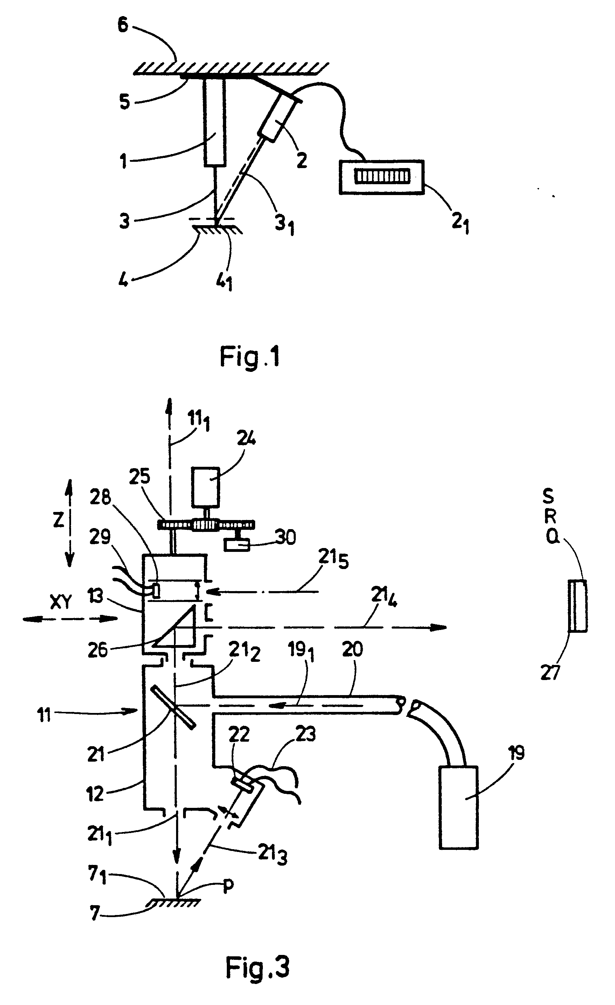

On connaît, par ailleurs, des capteurs dénommés d'une manière générale capteurs de position à faisceau laser qui se composent (voir figure 1) d'un générateur de faisceau laser 1 et d'un capteur 2 qui reçoit le faisceau laser 3 issu du générateur après réflexion sur la pièce 4 dont on désire mesurer la distance par rapport à une surface de référence.

Le générateur 1 et le capteur 2 sont montés sur un bâti 5, lui-même fixé sur une platine 6 qui constitue une surface de référence, de manière que le faisceau laser 3 perpendiculaire à la platine 6 vienne frapper la pièce 4 au point de mesure $4_1$. La position du faisceau laser réfléchi $3_1$ est alors, après étalonnage de l'appareil, fonction de la distance du point $4_1$ par rapport à la platine 6, c'est-à-dire par rapport à la surface de référence. Cette position du faisceau laser réfléchi $3_1$ est détectée par le capteur 2 qui produit une information envoyée dans un compteur $2_1$. Ce compteur affiche alors la distance du point $4_1$.

Un tel capteur de position à laser permet une bonne précision de mesure (inférieure au centième de millimètre) mais sa mise en oeuvre pour déterminer des coordonnées spatiales d'un point d'un outillage de soudage de carrosserie de véhicule automobile n'est pas envisageable, car cela nécessite la mise en oeuvre d'une platine de référence qui est incompatible, en raison de son encombrement, avec un outillage de soudage de carrosserie. En outre, une telle installation entraînerait des manipulations longues, car elle nécessiterait la fixation successive du bâti 5 sur la platine au droit de chaque point de mesure et, en outre, il serait nécessaire de déterminer pour chaque point de mesure les coordonnées exactes de la fixation du capteur de position sur la platine.

Suivant le brevet britannique N° GB-A-1 449 050, il est décrit un dispositif pour déterminer la position spatiale d'un objet. Dans ce cas, il est prévu trois faisceaux laser montés à rotation suivant un plan, de façon que l'intersection de ces faisceaux avec un capteur produise des signaux qui, combinés entre eux, soient significatifs de la position spatiale de ce capteur.

Suivant la demande de brevet européen N° EP-A-87 518, il est décrit un procédé et un appareil pour l'acquisition d'images, suivant lequel on capte l'image d'un faisceau laser conique creux projete sur un objet, afin que la structure des images obtenues soit comparée avec des images de référence pour permettre alors, par exemple, l'actionnement d'un bras manipulateur.

La demande de brevet européen N° EP-A-70 141 décrit un procédé et un dispositif pour la mesure des dimensions d'une pièce, suivant lequel on produit un faisceau laser convergent axisymétrique sous lequel se déplace l'objet dont on désire mesurer les dimensions. Le niveau de l'intersection du faisceau par les bords de la pièce permet alors de déterminer les dimensions de cette pièce.

Le brevet américain N° US-A-4 209 252 décrit un dispositif optique pour déterminer la forme de la surface d'un objet et, notamment, d'une lentille de contact, suivant lequel le dispositif produisant un faisceau optique convergent se déplace suivant un chemin déterminé au-dessus de l'objet, tandis que le point de focalisation de ce faisceau se déplace parallèlement à son axe.

La présente invention a pour but de permettre une détermination rapide et précise des coordonnées spatiales d'un nombre important de points et particulièrement de points d'un outillage de soudage de carrosserie de véhicule automobile en supprimant, pour chaque point de mesure, la nécessité d'une fixation mécanique particulière de l'appareil de mesure, et en supprimant donc, d'une part les moyens de fixation de l'appareil de mesure et, d'autre part, l'obligation de déterminer, pour chaque mesure, les coordonnées du point de fixation de l'appareil.

La présente invention a également pour but de permettre la comparaison directe des coordonnées des points de mesure déterminées par l'installation avec les coordonnées du point théorique correspondant fournies par l'expression numérique de la forme de la ou des pièces de carrosserie à positionner.

L'invention concerne à cet effet une installation pour la détermination des coordonnées spatiales d'un point d'une pièce, notamment pour le contrôle, à l'aide d'un moyen calculateur, d'un outillage tel qu'un outillage de soudage de carrosserie de véhicule automobile, cette installation comportant un générateur de faisceau laser, des moyens produisant la rotation de ce faisceau, un capteur produisant un premier signal lors de la réception de ce faisceau laser tournant, installation caractérisée en ce qu'elle comporte une tête mobile dans un plan parallèle à un plan de référence défini par deux axes coordonnés X, Y, cette tête comportant un diviseur de faisceau produisant un second faisceau laser à partir du faisceau issu du générateur de faisceau laser et projetant ce second faisceau sur le point de la pièce et un moyen capteur pour recevoir le second faisceau laser réfléchi par la pièce en ce point afin de produire un second signal fonction de la distance du point par rapport au plan de référence X, Y, les moyens produisant la rotation du faisceau laser comprenant un rotor sur la tête, l'axe de rotation de ce rotor étant perpendiculaire au plan de référence X, Y, ce rotor comportant un moyen recevant le faisceau laser dérivé du diviseur et projetant le faisceau laser tournant au moins trois cibles fixes dont les coordonnées par rapport au plan de référence sont connues, ces cibles réfléchissant le faisceau laser vers le capteur qui est situé dans le rotor de telle manière que le premier signal issu du capteur soit fonction de la position de la tête et donc de la projection du point de mesure sur le plan de référence X, Y, le moyen calculateur recevant les premier et second signaux et déterminant les coordonnées spatiales du point de mesure et un moyen d'affichage pour afficher ces coordonnées.

L'invention concerne aussi une installation pour la détermination des coordonnées spatiales d'un point d'une pièce notamment pour le contrôle, à l'aide d'un moyen calculateur, d'un outillage tel qu'un outillage de soudage de carrosserie de véhicule automobile, cette installation comportant un générateur de faisceau laser, des moyens produisant la rotation de ce faisceau, un moyen détecteur produisant un premier signal lors de la réception de ce faisceau laser tournant, installation caractérisée en ce qu'elle comporte une tête mobile dans un plan parallèle à un plan de référence défini par deux axes coordonnés X, Y, cette tête comportant un diviseur de faisceau produisant un second faisceau laser à partir du faisceau issu du générateur de faisceau laser et projetant ce second faisceau sur le point de la pièce et un moyen capteur pour recevoir le second faisceau laser réfléchi par la pièce en ce point afin de produire un second signal fonction de la distance du point par rapport au plan de référence X, Y, les moyens produisant la rotation du faisceau laser comprenant un rotor sur la tête, l'axe de rotation de ce rotor étant perpendiculaire au plan de référence X, Y, ce rotor comportant un moyen recevant le faisceau laser dérivé du diviseur et projetant le faisceau laser tournant, le moyen détecteur comprenant au moins trois cibles dont les coordonnées par rapport au plan de référence sont connues, ces cibles émettant chacune un premier signal lors de la réception du faisceau laser tournant, ces premiers signaux étant fonction de la position de la tête et, donc de la projection du point de mesure sur le plan de référence X, Y, le moyen calculateur recevant les premier et second signaux et déterminant les coordonnées spatiales du point de mesure et un moyen d'affichage pour afficher ces coordonnées.

Suivant une autre caractéristique de l'invention, l'axe de rotation du rotor de la tête est confondu avec l'axe de la tête.

Suivant une autre caractéristique de l'invention, la tête est mobile par translation dans le plan par pivotement sur un bras, lui-même pivotant sur un pied fixe.

L'invention est représentée à titre d'exemple non limitatif sur les dessins ci-joints, dans lesquels:

- la figure 1 est une vue latérale schématique d'un capteur de position à laser de type connu,
- la figure 2 est une vue en perspective d'un mode de réalisation de l'ensemble de l'installation conforme à l'invention,
- la figure 3 est une coupe axiale verticale de la tête de mesure de l'installation de la figure 2.

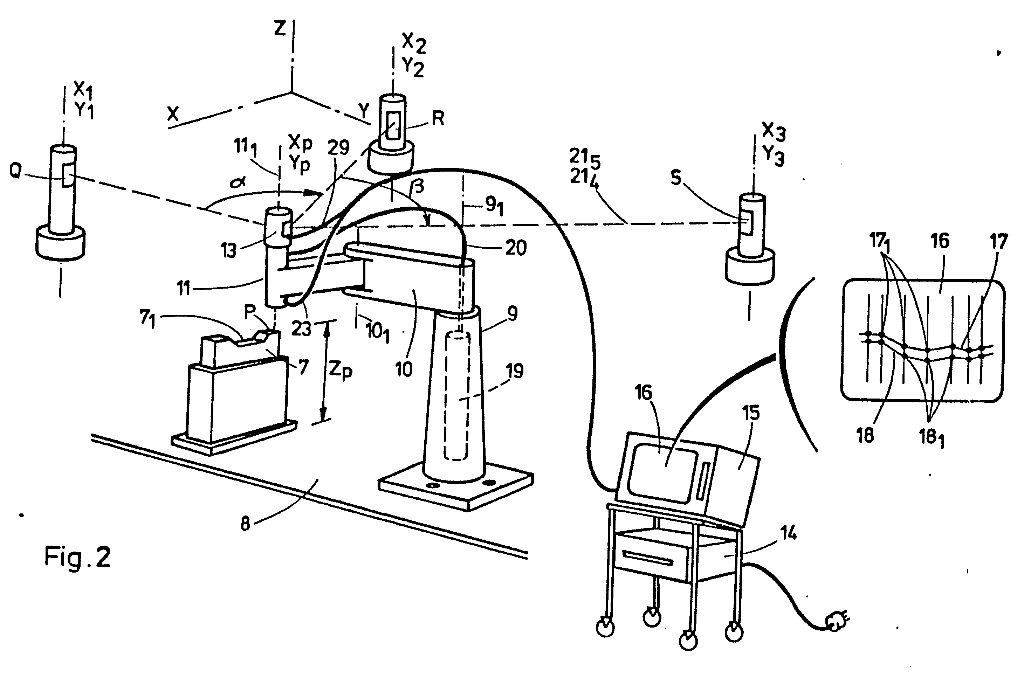

Suivant la figure 2, l'installation est destinée au contrôle d'un outillage de soudage de carrosserie de véhicule automobile, pour lequel une seule pièce d'appui 7 a été représentée, afin de simplifier le dessin. Egalement, sur ce dessin, les appareils de soudage et les organes de serrage qui sont connus en eux-mêmes n'ont pas été représentés afin de ne pas le compliquer.

La pièce d'appui 7 présente une surface $7_1$ dont la forme correspond à celle d'un élément de surface d'une pièces de carrosserie que l'on doit souder, cette pièce 7 devant donc être positionnée sur la platine de support 8 afin que chaque point de la surface $7_1$ occupe une position spatiale déterminée par rapport aux autres pièces 7 et que les parties de carrosserie s'adaptent correctement sur l'ensemble de ces pièces.

Sur la platine horizontale 8 est fixé un pied vertical 9 pourvu à son extrémité supérieure d'un bras 10 pivotant dans un plan horizontal sur un axe vertical $9_1$. Ce bras 10 reçoit également à pivotement sur un axe vertical $10_1$ une tête de mesure 11, cette tête de mesure pouvant ainsi se déplacer dans un plan horizontal X-Y afin de pouvoir être amené rapidement par translation à la verticale des points de mesure de l'ensemble des pièces d'appui, tel que le point P de la pièce 7.

Cette installation comporte également des cibles Q, R, S qui sont fixées sur la platine 8 de manière à être situées dans le plan X-Y, les

coordonnées $X_1$, $Y_1$, $X_2$, $Y_2$ et $X_3$, $Y_3$ de ces cibles sur la platine 8 prise comme référence étant ainsi connues.

Ces cibles seront éloignées des pièces 7 et de l'ensemble de l'outillage assurant le positionnement, le serrage et le soudage des pièces afin de ne pas géner leur mise en place et leur fonctionnement ultérieur.

La tête de mesure 11 comporte un boîtier inférieur 12 pourvu d'un capteur de position à faisceau laser propre à déterminer, après étalonnage, la distance $Z_p$ du point de mesure P par rapport à la platine 8 ou par rapport à toute autre surface de référence. Au-dessus de ce boîtier 12, est prévu un rotor 13 propre à déterminer, par triangulation, en coopérant avec les cibles Q, R, S, les coordonnées $X_p$, $Y_p$ de l'axe $11_1$ de la tête 11, ces coordonnées étant également celles du point P dans ce plan.

Les coordonnées $X_p$, $Y_p$ et $Z_p$ déterminent ainsi la position spatiale du point P et elles sont comparées, par un ordinateur 14, avec les coordonnées théoriques de ce même point emmagasinées dans une mémoire, afin qu'un organe de visualisation 15 puisse permettre de repérer sur son écran 16 la différence entre les coordonnées mesurées et les coordonnées théoriques mises en mémoire dans l'ordinateur. Ces coordonnées théoriques seront de préférence établies par l'expression numérique de la forme de la pièce ou des pièces de carrosserie à traiter.

Ainsi, ce contrôle pourra être réalisé en visualisant sur l'écran 16 des points $17_1$ correspondant chacun à la valeur mesurée $Z_p$ d'un point de mesure P de coordonnées $X_p$, $Y_p$, $Z_p$. On pourra ainsi obtenir par extrapolation une courbe 17 et en comparant la position de cette courbe 17 avec la courbe théorique 18 obtenue à partir des coordonnées théoriques mémorisées donnant la valeur théorique de $Z_t$, de Z pour divers points $18_1$ de coordonnées $X_t$, $Y_t$ et $Z_t$.

L'opérateur pourra alors contrôler le positionnement correct de la touche 7 en constatant la coïncidence des courbes 17 et 18 et dans le cas contraire, il modifiera la position de la pièce 7 sur la platine 8 afin d'obtenir cette coïncidence. Il pourra également obtenir, de ces systèmes, les valeurs numériques des écarts entre les positions réelles mesurées et les positions théoriques.

La tête de mesure 11 est alimentée par un faisceau laser $19_1$ issu d'un générateur de faisceaux laser 19 disposé dans le pied 4, ce faisceau laser étant transporté jusqu'à la tête 11 par un câble à fibres optiques 20.

Ce faisceau laser $19_1$ vient tout d'abord frapper, à l'intérieur du boîtier 12, un séparateur 21 connu en lui-même et constitué, par exemple, par un miroir semi-transparent et un ensemble de lentilles et de prismes. Ce séparateur 21 disposé suivant l'axe $11_1$ produit deux faisceaux laser émergeant opposés coaxiaux $21_1$ et $21_2$ qui sont projetés suivant l'axe $11_1$ de la tête 11 parallèle à la direction Z, c'est-à-dire perpendiculaire au plan X-Y.

Le faisceau $21_1$ est mis en oeuvre dans un capteur de position à faisceau laser afin de déterminer, après étalonnage, la distance $Z_p$.

A cet effet, le faisceau $21_1$ vient frapper la surface $7_1$ de la pièce 7 au point P et est réfléchi en $21_3$ vers le capteur 22 dont l'information, fonction de $Z_p$ est amenée vers l'ordinateur 14 et l'organe de visualisation 15.

Le rotor 13 est monté à rotation sur le boîtier 12 coaxialement à l'axe $11_1$ de la tête 11 et est à cet effet entraîné à partir du moteur 24 et par l'intermédiaire de l'ensemble d'engrenage 25.

Ce rotor 13 comporte un miroir 26 ou similaire qui produit, à partir du faisceau laser $21_2$ un faisceau $21_4$ disposé dans le plan X-Y et entraîné en rotation dans ce plan du fait de la rotation du rotor 13. Ainsi, au cours de la rotation du rotor 13, le faisceau laser $21_4$ vient successivement frapper et se réfléchir sur les surfaces réfléchissantes 27 des cibles Q, R, S, ces surfaces réfléchissantes étant constituées par des miroirs cylindriques dont l'axe est orienté suivant la direction Z.

Ainsi, quelle que soit la position de la tête 11, le faisceau laser $21_4$ réfléchi par les miroirs 27 suivant un faisceau $21_5$ est reçu par un capteur 28 disposé à l'intérieur de la tête 13 et orienté parallèlement au faisceau $21_4$.

La mesure des coordonnées $X_p$, $Y_p$ du point P est effectuée par triangulation par des mesures de type goniométrique. Ces coordonnées sont déterminées par la valeur des angles $\alpha$ et $\beta$ dont le sommet est constitué par l'axe $11_1$ de la tête 11 passant par le point P et dont les côtés sont délimités par les faisceaux laser $21_4$ et $21_5$ venant frapper et se réfléchir sur les cibles Q, R et R, S.

La mesure de ces angles est obtenue par le comptage d'impulsions fournies par l'action de la rotation de la tête sur un générateur 30 mécaniquement lié à cette rotation, chaque valeur angulaire de rotation correspondant à un nombre déterminé d'impulsions et permettant d'obtenir la précision de mesure cherchée. Pour chaque angle $\alpha$ et $\beta$ le comptage des impulsions commence et finit par le passage du rayon laser sur l'une des cibles Q, R, S, ce passage étant enregistré lors de la réception par l'élément opto-électronique 29 de l'écho dudit rayon.

Les nombres d'impulsions $N_\alpha$ et $N_\beta$ enregistrés par le système sont traduits par l'ordinateur en coordonnées $X_p$ et $Y_p$ de l'axe du système, à partir des couples $X_1$, $Y_1$, $X_2$, $Y_2$, $X_3$, $Y_3$ des coordonnées des cibles préalablement connues.

Bien entendu, un fonctionnement correct de l'installation conforme à l'invention ne pourra être obtenu qu'après étalonnage, c'est-à-dire après avoir déterminé de manière précise les coordonnées $X_1$, $Y_1$, $X_2$, $Y_2$ et $X_3$, $Y_3$ des cibles Q, R, S par rapport à une référence et de préférence par rapport à la platine 8 et après avoir déterminé la position de la tête 11 par rapport à cette même référence 8 dans la direction Z.

Après ces réglages, il suffira de déplacer la tête 11 dans le plan X-Y par pivotement de cette tête sur le bras 10 et du bras 10 sur le pied 9, afin de placer successivement la tête 11 à la verticale des divers points de mesure souhaités de l'ensemble des pièces 7.

Afin de simplifier la présente description, il est indiqué que le miroir 26 produit un faisceau $21_1$ qui tourne dans le plan X-Y contenant les cibles Q, R, S, ces cibles réfléchissant ce faisceau laser vers le capteur 28 du rotor. Il sera cependant compris que dans la pratique le miroir 26 et le capteur 28 pourront être décalés du plan contenant les cibles Q, R, S, le miroir, les cibles et le capteur étant dans ce cas inclinés de façon que dans tous les cas le faisceau laser tournant $21_4$ projeté par le miroir vienne frapper ces cibles et le renvoie vers le capteur 28.

Egalement, dans la présente description, les cibles Q, R, S sont des réflecteurs passifs, le passage du faisceau sur elles donnant lieu à un écho capté par l'élément opto-électronique 29.

Dans une seconde version du même dispositif, les cibles Q, R et S sont actives et comportent chacune un composant opto-électronique similaire à 28 et fournissant directement l'impulsion de passage pour le commencement ou l'arrêt du comptage angulaire.

Dans une autre version du même dispositif, les cibles Q, R et S sont également actives et fournissent lors du passage du rayon, outre l'impulsion de passage, une information sous forme analogique ou numérique relative à la hauteur de chaque cible par rapport à un niveau de référence lié au support de cible, cette hauteur étant celle à laquelle le faisceau agit sur une cible considérée. Dans ce cas, le système permettra de connaître, pour chaque couple X, Y, connu par avance, la coordonnée Z.

La référence des mesures n'est plus alors constituée par le plan supérieur de la platine 8 mais par un plan défini par les trois points $X_1$, $Y_1$, $Z_1$, $X_2$, $Y_2$, $Z_2$, $X_3$, $Y_3$, liés au dispositif et non à l'outillage.

## Revendications

1. Installation pour la détermination des coordonnées spatiales ($X_p$, $Y_p$, $Z_p$) d'un point (P) d'une pièce (7) notamment pour le contrôle, à l'aide d'un moyen calculateur, d'un outillage tel qu'un outillage de soudage de carrosserie de véhicule automobile, cette installation comportant un générateur (19) de faisceau laser, des moyens (13) produisant la rotation de ce faisceau, un capteur (28) produisant un premier signal lors de la réception de ce faisceau laser tournant, installation caractérisée en ce qu'elle comporte une tête (11) mobile dans un plan parallèle à un plan de référence défini par deux axes coordonnés X, Y, cette tête comportant un diviseur de faisceau (21) produisant un second faisceau laser (21) à partir du faisceau issu du générateur de faisceau laser et projetant ce second faisceau sur le point (P) de la pièce (7) et un moyen capteur (22) pour recevoir le second faisceau laser réfléchi ($21_3$) par la pièce (7) en ce point (P) afin de produire un second signal fonction de la distance ($Z_p$) du point (P) par rapport au plan de référence X, Y, les moyens produisant la rotation du faisceau laser comprenant un rotor (13) sur la tête (11), l'axe de rotation ($11_1$) de ce rotor étant perpendiculaire au plan de référence X, Y, ce rotor comportant un moyen (26) recevant le faisceau laser dérivé du diviseur (21) et projetant le faisceau laser tournant ($21_4$), au moins trois cibles fixes (Q, R, S) dont les coordonnées par rapport au plan de référence sont connues, ces cibles réfléchissant le faisceau laser vers le capteur (28), qui est situé dans le rotor (13) de telle manière que le premier signal issu du capteur soit fonction de la position ($X_p$, $Y_p$) de la tête (11) et donc de la projection du point de mesure (P) sur le plan de référence X, Y, le moyen calculateur recevant les premier et second signaux (23, 28) et déterminant les coordonnées spatiales ($X_p$, $Y_p$ et $Z_p$) du point de mesure (P) et un moyen d'affichage (15) pour afficher ces coordonnées.

2. Installation pour la détermination des coordonnées spatiales ($X_p$, $Y_p$, $Z_p$) d'un point (P) d'une pièce (7) notamment pour le contrôle, à l'aide d'un moyen calculateur, d'un outillage tel qu'un outillage de soudage de carrosserie de véhicule automobile, cette installation comportant un générateur (19) de faisceau laser, des moyens (13) produisant la rotation de ce faisceau, un moyen détecteur (28) produisant un premier signal lors de la réception de ce faisceau laser tournant, installation caractérisée en ce qu'elle comporte une tête (11) mobile dans un plan parallèle à un plan de référence défini par deux axes coordonnés X, Y, cette tête comportant un diviseur de faisceau (21) produisant un second faisceau laser (21) à partir du faisceau issu du générateur de faisceau laser et projetant ce second faisceau sur le point (P) de la pièce (7) et un moyen capteur (22) pour recevoir le second faisceau laser réfléchi ($21_3$) par la pièce (7) en ce point (P) afin de produire un second signal fonction de la distance ($Z_p$) du point (P) par rapport au plan de référence X, Y, les moyens produisant la rotation du faisceau laser comprenant un rotor (13) sur la tête (11), l'axe de rotation ($11_1$) de ce rotor étant perpendiculaire au plan de référence X, Y, ce rotor comportant un moyen (26) recevant le faisceau laser dérivé du diviseur (21) et projetant le faisceau laser tournant ($21_4$), le moyen détecteur comprenant au moins trois cibles (Q, R, S) dont les coordonnées par rapport au plan de référence sont connues, ces cibles émettant chacune un premier signal lors de la réception du faisceau laser tournant, ces premiers signaux étant fonction de la position ($X_p$, $Y_p$) de la tête (11) et donc de la projection du point de mesure (P) sur le plan de référence X, Y, le moyen calculateur recevant les premier et second signaux (23, 28) et déterminant les coordonnées spatiales ($X_p$, $Y_p$ et $Z_p$) du point de mesure (P) et un moyen d'affichage (15) pour afficher ces coordonnées.

3. Installation conforme à l'une quelconque des revendications 1 ou 2, caractérisée en ce que l'axe de rotation du rotor (13) de la tête est confondu avec l'axe (11$_1$) de la tête.

4. Installation conforme à l'une quelconque des revendications 1 à 3, caractérisée en ce que la tête (11) est mobile par translation, dans le plan parallèle au plan X, Y, par pivotement sur un bras (10) lui-même pivotant sur un pied fixe (9).

5. Installation conforme à l'une quelconque des revendications 1 à 4, caractérisée en ce que le diviseur de faisceau laser (21) recevant le faisceau laser (19$_1$) issu du générateur de faisceau laser (19), produit deux faisceaux laser opposés (21$_1$ et 21$_2$) coaxiaux, l'un (21$_1$) de ces faisceaux étant dirigé vers le point (P) de la pièce (7) pour être réfléchi vers le moyen capteur (22), l'autre (21$_2$) de ces faisceaux étant dirigé vers le rotor produisant le faisceau laser tournant (21$_4$).

6. Installation conforme à l'une quelconque des revendications 1, 3, 4 et 5, caractérisée en ce qu'un séquenceur (30) est entraîné en synchronisme avec le rotor (13), les impulsions produites par ce séquenceur étant amenées au générateur de faisceau laser (19) pour produire un faisceau laser impulsionnel (19$_1$) dont les impulsions sont fonction de la position angulaire du rotor, les impulsions du faisceau laser (21$_1$) réfléchi vers le capteur (28) du rotor par les cibles (Q, R, S) déterminant une information de position de la tête (11) à partir de la valeur des angles dont le sommet est constitué par l'axe (11$_1$) de la tête et qui passent par des cibles (Q, R, S).

7. Installation conforme à l'une quelconque des revendications 1 et 2, caractérisée en ce que le calculateur compare les coordonnées (X$_p$, Y$_p$ et Z$_p$) obtenues par l'intermédiaire des cibles (Q, R, S) et par le capteur (22) avec les informations numériques mémorisées de la forme de la ou des pièces de carrosserie à assembler.

**Patentansprüche**

1. Vorrichtung zur Messung der räumlichen Koordinaten (X$_p$, Y$_p$, Z$_p$) eines Punktes (P) eines Objektes (7) mit Hilfe eines Rechners insbesondere zur Kontrolle eines Arbeitsgerätes wie z. B. eines Automobilkarosserie-Schweißgerät umfassend einen Laserstrahlgenerator (19), Mittel (13), die die Drehung des Strahles bewirken, und einen Meßfühler (28), der beim Empfang des sich drehenden Laserstrahles ein erstes Signal erzeugt,
<u>dadurch gekennzeichnet,</u>
daß die Vorrichtung in einer Ebene parallel zur Bezugsebene, die durch zwei Koordinatenachsen (X, Y) bestimmt wird, einen beweglichen Kopf (11), der einen Strahlenteiler (21) umfaßt, von dem ein zweiter Laserstrahl (21$_1$) von dem vom Laserstrahlgenerator ausgehenden Strahl ableitbar ist und der den zweiten Strahl auf den Punkt (P) des Objektes (7) projiziert, sowie einen Meßfühler (22) umfaßt, der den zweiten Laserstrahl (21$_3$) empfängt, der durch das Objekt (7) in dem Punkt (P) reflektiert wird, damit ein zweites Signal als Funktion der Entfernung (Z$_p$) des Punktes (P) bezogen auf die Bezugebene X, Y erzeugt wird, wobei die Mittel, die die Drehung des Laserstrahls bewirken, auf dem Kopf (11) einen Rotor (13) enthalten, dessen Rotationsachse (11$_1$) senkrecht zur Bezugsebene X, Y verläuft, und wobei der Rotor ein Mittel (26) enthält, das den von dem Strahlenteiler (21) stammenden Laserstrahl aufnimmt und den sich drehenden Laserstrahl (21$_4$) mit Hilfe von drei festen Platten (Q, R, S) projiziert, deren Koordinaten in bezug auf die Bezugsebene bekannt sind, und wobei die Platten den Laserstrahl zu dem Meßfühler (28), der sich in dem Rotor (13) befindet, derart hin reflektieren, daß das erste vom Meßfühler erzeugte Signal eine Funktion der Stellung (X$_p$, Y$_p$) des Kopfes und somit der Projektion des Meßpunktes (P) auf die Bezugsebene X, Y ist, und wobei der Rechner die ersten und zweiten Signale (23, 28) empfängt und die räumlichen Koordinaten (X$_p$, Y$_p$ und Z$_p$) des Meßpunktes (P) bestimmt, und wobei die Vorrichtung zum Anzeigen der Koordinaten ein Anzeigemittel (15) umfaßt.

2. Vorrichtung zur Messung der räumlichen Koordinaten (X$_p$, Y$_p$, Z$_p$) eines Punktes (P) eines Objektes (7), mit Hilfe eines Rechners insbesondere zur Kontrolle eines Arbeitsgerätes wie z. B. ein Automobilkarosserie-Schweißgerät umfassend einen Laserstrahlgenerator (19), Mittel (13), die die Drehung des Strahles bewirken, eine Detektoreinrichtung (28), das ein erstes Signal beim Empfang des sich drehenden Laserstrahles erzeugt,
<u>dadurch gekennzeichnet,</u>
daß die Vorrichtung in einer Ebene parallel zur Bezugsebene, die durch zwei koordinierte Achsen (X, Y) bestimmt wird, einen beweglichen Kopf (11), der einen Strahlenteiler (21) umfaßt, von dem ein zweiter Laserstrahl (21$_1$) von dem vom Laserstrahlgenerator ausgehenden Strahl ableitbar ist und der den zweiten Strahl auf den Punkt (P) des Objektes (7) projiziert, sowie einen Meßfühler (22) umfaßt, der den zweiten Laserstrahl (21$_3$) empfängt, der durch das Objekt (7) zu dem Punkt (P) reflektiert wird, um ein zweites Signal zu erzeugen als Funktion der Entfernung (Z$_p$) des Punktes bezogen auf die Bezugsebene X, Y, wobei die Mittel die die Drehung des Laserstrahls bewirken, auf dem Kopf (11) einen Rotor (13) enthalten, dessen Rotationsachse (11$_1$) senkrecht zur Bezugsebene X, Y verläuft, und wobei der Rotor ein Mittel (26) enthält, das den von dem Strahlenteiler (21) stammenden Laserstrahl aufnimmt und den sich drehenden Laserstrahl (21$_4$) projiziert, wobei die Detektoreinrichtung zumindest drei Platten (Q, R, S) umfaßt, deren Koordinaten in bezug auf die Bezugsebene bekannt sind, wobei jede der Platten beim Empfang des drehenden Laserstrahles ein erstes Signal aussendet, und wobei die ersten Signale Funktion der Stellung $(X_p, Y_p)$ des Kopfes (11) und folglich auch der Projektion des Meßpunktes (P) auf die Bezugsebene X, Y sind, und wobei der Rechner die ersten und zweiten Signale (23, 28) empfängt und die räumlichen Koordinaten $(X_p, Y_p$ und $Z_p)$ des Meßpunktes (P) bestimmt, und wobei die Vorrichtung zum Anzeigen der Koordinaten ein Anzeigemittel (15) umfaßt.

3. Vorrichtung gemäß einem der Ansprüche 1 oder 2,

dadurch gekennzeichnet,

daß die Rotationsachse des Rotors (13) des Kopfes mit der Achse $(11_1)$ des Kopfes zusammenfällt.

4. Vorrichtung gemäß einem der Ansprüche 1 bis 3,

dadurch gekennzeichnet,

daß der Kopf (11) durch Translation in der Ebene parallel zur Ebene X, Y durch Schwenkung auf einem auf einem festen Fuß (9) drehbaren Arm (10) beweglich ist.

5. Vorrichtung gemäß einem der Ansprüche 1 bis 4,

dadurch gekennzeichnet,

daß der Laserstrahlteiler (21), der den vom Laserstrahlgenerator (19) ausgehenden Laserstrahl $(19_1)$ empfängt, zwei koaxiale, entgegengesetzte Laserstrahlen $(21_1$ und $21_2)$ erzeugt, wobei der eine der Strahlen $(21_1)$ auf den Punkt (P) des Objektes (7) zur Reflektion zu dem Meßfühlermittel (22) hin und der andere der Strahlen $(21_2)$ auf den Rotor gerichtet ist, der das Drehen des Laserstrahls $(21_4)$ bewirkt.

6. Vorrichtung gemäß einem der Ansprüche 1, 3, 4 und 5,

dadurch gekennzeichnet,

daß ein Folgeschalter (30) synchron mit dem Rotor (13) bewegbar ist, daß die von dem Folgeschalter erzeugten Impulse dem Laserstrahlgenerator (19) zur Erzeugung eines gepulsten Laserstrahls $(19_1)$ zuführbar sind, daß die Impulse eine Funktion der Winkelstellung des Rotors sind, daß die zu dem Meßfühler (28) des Rotors durch die Platten (Q, R, S) reflektierten Impulse des Laserstrahls $(21_1)$ eine Information der Stellung des Kopfes (11) von dem Wert der Winkel bestimmen, deren Spitze durch die Achse $(11_1)$ des Kopfes gebildet ist und die die Platten (Q, R, S) passieren.

7. Vorrichtung gemäß einem der Ansprüche 1 und 2,

dadurch gekennzeichnet,

daß der Rechner die Koordinaten $(X_p, Y_p$ und $Z_p)$, die mittels der Platten (Q, R, S) und des Meßfühlers (22) erhaltbar sind, mit den gespeicherten numerischen Informationen hinsichtlich der Form des oder der Teile der Karosserie, die zusammenzubauen sind, vergleicht.

**Claims**

1. Equipment for determining the spatial co-ordinates $(X_p, Y_p, Z_p)$ of a point (P) on a workpiece (7) particularly for controlling, with the aid of a computer device, a machine, such as a machine for welding motor vehicle bodywork, this equipment comprising a laser beam generator (19), a means (13) for causing this beam to rotate, a sensor (28) producing a first signal on receiving this rotating laser beam, equipment characterised in that it incorporates a head (11) moving in a plane parallel to a reference plane defined by two co-ordinate axes X, Y, this head incorporating a beam splitter (21) producing a second laser beam (21) from the beam emitted by the laser beam generator and projecting this second beam onto the point (P) on the workpiece (7) and a sensor (22) for receiving the second laser beam reflected $(21_3)$ by the workpiece (7) at this point (P) so as to produce a second signal which is a function of the distance $(Z_p)$ of the point (P) relative to the reference plane X, Y, the means producing the rotation of the laser beam comprising a rotor (13) on the head (11), the axis of rotation $(11_1)$ of this rotor being perpendicular to the reference plane X, Y, this rotor incorporating a device (26) receiving the laser beam reflected from the splitter (21) and profecting the rotating laser beam $(21_4)$, at least three fixed targets (Q, R, S) whose co-ordinates relative to the reference plane are known, these targets reflecting the laser beam towards the sensor (28), which is located in the rotor (13) in such a way that the first signal emitted by the sensor is a function of the position $(X_p, Y_p)$ of the head (11) and therefore of the projection of the point being measured (P), onto the reference plane X, Y, the computer device receiving the first and second signals (23, 28) and determining the spatial co-ordinates $(X_p, Y_p$ and $Z_p)$ of the point being measured (P) and a display device (15) for displaying these co-ordinates.

2. Equipment for determining the spatial co-ordinates $(X_p, Y_p, Z_p)$ of a point (P) on a workpiece (7) particularly for controlling, with the aid of a computer device, a machine, such as a machine for welding motor vehicle bodywork, this equipment comprising a laser beam generator (19), means (13) for causing this beam to rotate, a sensor (28) producing a first signal on receiving this rotating laser beam, equipment characterised in that it incorporates a head (11) moving in a plane parallel to a reference plane defined by two co-ordinate axes X, Y, this head incorporating a beam splitter (21) producing a second laser beam (21) from the beam emitted by the laser beam generator and projecting this second beam onto the point (P) on the workpiece (7) and a sensor (22) for receiving the second laser beam reflected $(21_3)$ by the workpiece (7) at this point (P) so as to produce a second signal which is a function of the distance $(Z_p)$ of the point (P) relative to the reference plane X, Y, the means producing the rotation of the laser beam comprising a rotor (13) on the head (11), the axis of rotation ($11_1$) of this rotor being perpendicular to the reference plane X, Y, this rotor incorporating a device (26) receiving the laser beam reflected from the splitter (21) and projecting the rotating laser beam ($21_4$), the sensing device incorporating at least three targets (Q, R, S) whose co-ordinates relative to the reference plane are known, these targets each emitting a first signal on receiving the rotating laser beam, these first signals being a function of the position ($X_p$, $Y_p$) of the head (11) and therefore of the projection onto the reference plane X, Y of the point being measured (P), the computer device receiving the first and second signals (23, 28) and determining the spatial co-ordinates ($X_p$, $Y_p$ and $Z_p$) of the point being measured (P) and a display device (15) for displaying these co-ordinates.

3. Equipment in accordance with either of claims 1 or 2, characterised in that the axis of rotation of the rotor (13) on the head is identical with the axis ($11_1$) of the head.

4. Equipment in accordance with any one of claims 1 to 3, characterised in that the head (11) is capable of translational motion, in the plane parallel to the plane X, Y, by pivoting on an arm (10) which itself pivots on a fixed column (9).

5. Equipment in accordance with any one of claims 1 to 4, characterised in that the laser beam splitter (21) receiving the laser beam ($19_1$) emitted from the laser beam generator (19) produces two laser beams ($21_1$ and $21_2$), coaxial and in opposite directions, one ($21_1$) of these beams being directed towards the point (P) on the workpiece (7) in order to be reflected towards the sensor (22), the other ($21_2$) of these beams being directed towards the rotor producing the rotating laser beam ($21_4$).

6. Equipment in accordance with any one of claims 1, 3, 4 and 5, characterised in that a sequencer (30) is driven in synchronism with the rotor (13), the pulses produced by this sequencer being transmitted to the laser beam generator (19) in order to produce a pulsed laser beam ($19_1$) whose pulses are a function of the angular position of the rotor, the pulses of the laser beam ($21_1$) reflected towards the rotor sensor (28) by the targets (Q, R, S) establishing information about the position of the head (11) from the value of the angles whose apex is formed by the axis ($11_1$) of the head and which passes through the targets (Q, R, S).

7. Equipment in accordance with either of claims 1 and 2, characterised in that the computer compares the co-ordinates ($X_p$, $Y_p$ and $Z_p$) obtained by means of the targets (Q, R, S) and by the sensor (22) with the memorised digital data of the shape of the bodywork component or components to be assembled.

Fig.1

Fig.3

1

Fig. 2